# EUROPEAN PATENT APPLICATION

(11) **EP 3 974 380 A1**
(43) Date of publication of application: **30.03.2022**
(21) Application number: 19937629.4
(22) Date of filing: 27.12.2019
(51) Int. Cl.: C01B 21/068

(54) **METHOD FOR PREPARING SILICON NITRIDE POWDER BY METAL REDUCTION**

(30) Priority: 16.07.2019 CN 201910642283
(71) Applicant: Qingdao Cup New Materials Co., Ltd., Qingdao, Shandong 266200 (CN)
(72) Inventor: CUI, Wei, Beijing 100020 (CN); ZHANG, Jie, Beijing 100020 (CN); LI, Fei, Beijing 100020 (CN); CHENG, Huiming, Beijing 100020 (CN)
(74) Representative: Gille Hrabal Partnerschaftsgesellschaft mbB Patentanwälte
(86) International application number: PCT/CN2019/129456
(87) International publication number: WO 2021/008089

(57) **Abstract**

A method for directly preparing high quality silicon nitride powder by a combustion synthesis method, which uses the silicon powder as a raw material and uses a reactive metal as a reducing agent. The method comprises the following steps: mixing reaction raw materials such as silicon powder and a silicon nitride diluent by proportion, and then adding a quantitative amount of metal powder to uniformly mix with the reaction raw materials, placing a mixture into a combustion synthesis reaction device, and inducing the reaction under a specific pressure to obtain the high quality silicon nitride powder. According to the process method in the present invention, the reactive metal having a stronger reducibility than the reaction raw material is used to reduce oxygen in the reaction raw material so as to generate a corresponding metal oxide. The silicon nitride powder prepared by the process method in the present invention has low oxygen content, good crystallinity, high purity, and excellent sintering performance.

## Description

The present application claims the priority of the prior application NO. 201910642283.2 submitted to China National Intellectual Property Administration on July 16, 2019 which is entitled "METHOD FOR PREPARING SILICON NITRIDE POWDER BY METAL REDUCTION". The entire contents of the prior application are incorporated herein by reference.

### TECHNICAL FIELD

The present invention relates to the technology of preparing high-quality silicon nitride ceramic powders, and in particular to a process technology for preparing silicon nitride powders with low oxygen content by adding active metal powders as reducing agents, and belongs to the field of inorganic nonmetallic powder materials.

### BACKGROUND ART

Silicon nitride ceramics have low density, high thermal conductivity, high hardness, good thermal stability and chemical stability and other excellent properties, which make them materials having the most comprehensive performance in the structural ceramic family. Silicon nitride is widely used in ceramic engines, cutting tools, thermally conductive substrates and other fields. The importance of silicon nitride powder as its main raw material is evident. During the sintering process of silicon nitride ceramics, oxygen in the silicon nitride raw material has an adverse effect on the ceramic properties, which can greatly reduce the mechanical properties as well as the thermal conductivity of silicon nitride ceramics. Therefore, the preparation of a silicon nitride powder with low oxygen content, which is particularly suitable for ceramic sintering, will greatly improve the performance of ceramics. However, there is no effective method to reduce the oxygen content in the powder during the preparation of silicon nitride powder that has been commercialized.

### SUMMARY OF THE DISCLOSURE

The purpose of the present invention is to provide a method of preparing high-quality silicon nitride powder by adding active metal powder as a reducing agent in the raw material, so that the oxygen content of the produced silicon nitride powder is less than 1 wt% and the final product obtained is high-quality silicon nitride with adjustable phase content, average particle size of 1-50 µm, metal oxide content of 0-10 wt% and impurity content of less than 1 wt%.

Embodiments of the present invention provide a method for preparing silicon nitride powder by metal reduction, the method comprising the steps of:
(1) preparing the following components:
   silicon powder;
   silicon nitride diluent;
   ammonium chloride additive;
(2) mixing the above components well to obtain a mixture;
(3) adding metal powder to the mixture, then mixing the metal powder with the mixture well to obtain a second mixture, and mixing the second mixture well in a V-mixer and/or sieving it to obtain combustion synthesis raw material; in the combustion synthesis raw material, the silicon powder accounts for 20-70wt%, the silicon nitride diluent accounts for 70-20wt% and the ammonium chloride additive accounts for 0- 20wt%;
(4) carrying out combustion synthesis of the combustion synthesis raw material obtained in step (3) to obtain the silicon nitride powder.

According to an embodiment of the present invention, in the method, for example, purity of the silicon powder raw material in step (1) is > 99wt%.

According to an embodiment of the present invention, in the method, for example, a particle size range of the silicon powder in step (1) is 100-200 mesh.

According to an embodiment of the present invention, in the method, for example, a weight percentage of the metal powder added in step (3) is 0.01-10% of all components.

According to an embodiment of the present invention, in the method, for example, the step (4) comprises: loosely loading the mixture obtained in step (3) in a material boat, then placing the material boat in a combustion synthesis reaction device, evacuating it, filling it with high-purity nitrogen gas, maintaining the pressure in the combustion synthesis reaction device at 1-8 MPa, and igniting the igniter with an energized tungsten coil to induce the combustion synthesis reaction. At the end of the reaction, pressure in the combustion synthesis reaction device begins to fall, at this time releasing the gas in the device, while passing circulating water for cooling. The final product is a loose, easily broken lump, and coarse silicon nitride powder is obtained after grinding; preferably, the purity of the high-purity nitrogen is above 97%, or the purity of the high-purity nitrogen is above 99.9%.

According to an embodiment of the present invention, in the method, for example, the method further comprises a step (5) after step (4): washing the silicon nitride powder obtained in step (4) with acid for purification to obtain silicon nitride powder.

According to an embodiment of the present invention, in the method, for example, the diluent in step (1) is a high-purity silicon nitride powder with an average particle size in the range of 0.5-10 µm, the high-purity silicon nitride powder having an α phase content of >60 wt%.

According to an embodiment of the present invention, in the method, for example, the ammonium chloride additive in step (1) has an average particle size of 0.1-50 µm and a purity of >99 wt %.

According to an embodiment of the present invention, in the method, for example, the mixing described in step (2) comprises sand milling, ball milling, stirring milling, V-mixer blending and/or roller milling.

According to an embodiment of the present invention, in the method, for example, the metal powder described in step (3) comprises at least one of magnesium, calcium, iron, nickel, zinc, aluminum, lithium, sodium, potassium, yttrium, ytterbium.

Preferably, the sieving in step (3) comprises sieving with a screen having 40-100 mesh holes; further preferably, the sieving in step (3) comprises sieving with a screen having 60 mesh holes. The purpose of "mixing the second mixture well in a V-mixer and/or sieving it" as described in step (3) is to improve the build-up of the reaction material, making it fluffier and more conducive to subsequent combustion synthesis. In particular, further sieving after mixing in the V-mixer can further improve the build-up of the reaction material. Sieves of 40-100 mesh or, better still, 60 mesh are suitable for sieving. Too fine a screen may lead to a change in the composition of the reaction material; too coarse a screen does not sufficiently improve the accumulation of the reaction material.

According to an embodiment of the present invention, in the method, for example, the metal powder described in step (3) has a particle size of 20-1000 mesh, an oxygen content of <5 wt % and a purity of >99 wt %, the oxygen content being not counted as an impurity in the purity. Preferably, the metal powder has a particle size of 50-200 mesh; preferably, the metal powder has a particle size of 200-1000 mesh. In the case of carrying out crushing process and mixing process of the metal powder in the air, it is better to control particle size of the metal powder in 50-200 mesh. Because in such a case, if the metal powder is too fine (such as 200 mesh metal powder), due to the influence of oxygen in the air, the oxygen content carried by the metal powder itself is elevated. But if crushing process and mixing process of the metal powder is carried out throughout inert gas protection, oxygen cannot enter due to isolation of air, the metal powder particle size can be as fine as possible, such as fine to 1000 mesh.

According to an embodiment of the present invention, in the method, for example, the mixing described in step (3) comprises sand milling, ball milling, stirring milling, V-mixer blending and/or roller milling.

According to an embodiment of the invention, in the method, for example, for metal powder that is prone to oxidation in air, the mixing process should be carried out in an atmosphere of inert gas.

According to an embodiment of the present invention, in the method, for example, the metal powder that is prone to oxidation in air comprise calcium, lithium, sodium, potassium, yttrium and ytterbium.

According to an embodiment of the present invention, in the method, for example, the sieving described in step (3) is carried out using a sieve with a mesh size of 20-1000 mesh.

According to an embodiment of the present invention, in the method, for example, the step (5) comprises: coarsely sieving the silicon nitride powder obtained in step (4) with a sieve of 20-500 mesh and washing with a mixture of nitric acid, hydrochloric acid and sulfuric acid to remove metal oxides from the silicon nitride powder.

According to an embodiment of the present invention, in the method, for example, in the mixture of nitric acid, hydrochloric acid and sulfuric acid, a ratio of volume content of nitric acid, hydrochloric acid and sulfuric acid is 10%-20%, 60%-80% and 10%-20%, respectively, and a mass fraction of each acid solution is less than 68%, 20% and 70%, respectively; washing with acid for 1-10 hours, the powder after washing with acid is washed 1-5 times to remove water-soluble substances, and dried by pressure filter drying, spray drying or vacuum drying after filtration.

Embodiments of the present invention also provide silicon nitride powder prepared according to the above method, the silicon nitride powder having an average particle size of 1-50 µm, a metal oxide content of 0-10 wt% and an impurity content of less than 1 wt%.

According to an embodiment of the present invention, for example, the silicon nitride powder contains less than 1 wt% of metal oxides, and the sintered body has a thermal conductivity of 90 W/mK or more and a flexural strength of 700 MPa or more.

According to an embodiment of the present invention, for example, the sintering conditions of the sintered body are: mixing the silicon nitride powder with MgO and Y₂O₃, grinding, and dry pressing to form a prime billet, and sintering the prime billet at 1900°C and 1 MPa nitrogen pressure for 8h.

Embodiments of the present invention also provide a sintered body, the sintered body is sintered using silicon nitride powder prepared by the above methods, the silicon nitride powder has an average particle size of 1-50 µm, a metal oxide content of 0-10 wt% and an impurity content of less than 1 wt%.

Embodiments of the present invention further provide a method of manufacturing the sintered body, the method comprising:
(1) preparing raw materials according to following weight percentages:
   silicon powder20-70 wt %;
   silicon nitride diluent: 70-20 wt %;
   ammonium chloride additive: 0-20 wt %;
(2) mixing the above raw materials well to obtain a mixture;
(3) adding metal powder to the mixture, then mixing the metal powder with the mixture well to obtain a second mixture, and sieving the second mixture to obtain a third mixture;
(4) carrying out combustion synthesis of the third mixture obtained in step (3) to obtain silicon nitride powder;
(5) washing the silicon nitride powder obtained from step (4) with acid for purification to obtain purified silicon nitride powder;
(6) mixing, grinding and dry pressing the purified silicon nitride powder with MgO and Y₂O₃ to form a prime billet, and sintering the prime billet at 1900°C and 1 MPa nitrogen pressure for 8h.

According to an embodiment of the present invention, in the method, for example, the step (6) comprises: weighing 90 wt% of the silicon nitride powder of Example 2, 5 wt% MgO, and 5 wt% Y₂O₃, respectively, mixing the above three materials with alcohol, and ball milling on a planetary mill for 2 h with silicon nitride balls as medium, followed by vacuum drying at 80 °C; passing dried powder through a 60 mesh sieve, and the sieved powder was dry pressed at a pressure of 20 MPa, followed by cold isostatic pressing of the dry pressed prime billet at 220 MPa; the formed prime billet was sintered under 1 MPa nitrogen pressure at 1900°C for 8 h. The sintered sample was cooled down with the furnace. The sintered sample was tested for thermal conductivity and three-point flexural strength, and the thermal conductivity was 100 W/mK and flexural strength was 800 MPa.

According to an embodiment of the present invention, in the method, for example, a purity of the silicon powder in step (1) is > 99wt%.According to an embodiment of the present invention, in the method, for example, a particle size range of the silica powder in step (1) is 100-200 mesh.

According to an embodiment of the present invention, in the method, for example, a weight percentage of the metal powder added in step (3) is 0.01-10% of all components.

According to an embodiment of the present invention, in the method, for example, the step (4) comprises: loosely loading the mixture obtained in step (3) in a material boat, then placing the material boat in a combustion synthesis reaction device, evacuating it, filling it with high-purity nitrogen gas, maintaining the pressure in the combustion synthesis reaction device at 1-8 MPa, and igniting the igniter with an energized tungsten coil to induce the combustion synthesis reaction. At the end of the reaction, pressure in the combustion synthesis reaction device begins to fall, at this time releasing the gas in the device, while passing circulating water for cooling. The final product is a loose, easily broken lump, and coarse silicon nitride powder is obtained after grinding; preferably, the purity of the high-purity nitrogen is above 97%, or the purity of the high-purity nitrogen is above 99.9%.

According to an embodiment of the present invention, in the method, for example, the method further comprises a step (5) after step (4): washing the silicon nitride powder obtained in step (4) with acid for purification to obtain silicon nitride powder.

According to an embodiment of the present invention, in the method, for example, the diluent in step (1) is a high-purity silicon nitride powder with an average particle size in the range of 0.5-10 µm, the high-purity silicon nitride powder having an α phase content of >60 wt%.

According to an embodiment of the present invention, in the method, for example, the ammonium chloride additive in step (1) has an average particle size of 0.1-50 µm and a purity of >99 wt %.

According to an embodiment of the present invention, in the method, for example, the mixing described in step (2) comprises sand milling, ball milling, stirring milling, V-mixer blending and/or roller milling.

According to an embodiment of the present invention, in the method, for example, the metal powder described in step (3) comprises at least one of magnesium, calcium, iron, nickel, zinc, aluminum, lithium, sodium, potassium, yttrium, ytterbium.

According to an embodiment of the present invention, in the method, for example, the metal powder described in step (3) has a particle size of 20-1000 mesh, an oxygen content of <5 wt % and a purity of >99 wt %, the oxygen content being not counted as an impurity in the purity. Preferably, the metal powder has a particle size of 50-200 mesh; preferably, the metal powder has a particle size of 200-1000 mesh. In the case of carrying out crushing process and mixing process of the metal powder in the air, it is better to control particle size of the metal powder in 50-200 mesh. Because in such a case, if the metal powder is too fine (such as 200 mesh metal powder), due to the influence of oxygen in the air, the oxygen content carried by the metal powder itself is elevated. But if crushing process and mixing process of the metal powder is carried out throughout inert gas protection, oxygen cannot enter due to isolation of air, the metal powder particle size can be as fine as possible, such as fine to 1000 mesh.

According to an embodiment of the present invention, in the method, for example, the mixing described in step (3) comprises sand milling, ball milling, stirring milling, V-mixer blending and/or roller milling.

According to an embodiment of the invention, in the method, for example, for metal powder that is prone to oxidation in air, the mixing process should be carried out in an atmosphere of inert gas.

According to an embodiment of the present invention, in the method, for example, the metal powder that is prone to oxidation in air comprise calcium, lithium, sodium, potassium, yttrium and ytterbium.

According to an embodiment of the present invention, in the method, for example, the sieving described in step (3) is carried out using a sieve with a mesh size of 20-1000 mesh.

According to an embodiment of the present invention, in the method, for example, the step (5) comprises: coarsely sieving the silicon nitride powder obtained in step (4) with a sieve of 20-500 mesh and washing with a mixture of nitric acid, hydrochloric acid and sulfuric acid to remove metal oxides from the silicon nitride powder.

According to an embodiment of the present invention, in the method, for example, in the mixture of nitric acid, hydrochloric acid and sulfuric acid, a ratio of volume content of nitric acid, hydrochloric acid and sulfuric acid is 10%-20%, 60%-80% and 10%-20%, respectively, and a mass fraction of each acid solution is less than 68%, 20% and 70%, respectively; washing with acid for 1-10 hours, the powder after washing with acid is washed 1-5 times to remove water-soluble substances, and dried by pressure filter drying, spray drying or vacuum drying after filtration.

The present invention has the characteristics of low energy consumption, simple equipment, energy saving, non-pollution, non-toxic, etc. The phase content of the prepared silicon nitride powder can be controlled, and its outstanding advantages are:
1. By adding active metal powder, the metal will react with the oxygen in the reaction system and generate the corresponding metal oxides in the process of reaction because the metal has stronger reducing property than the silicon powder and silicon nitride, thus reducing the oxygen content in the generated silicon nitride and improving the sintering performance of the powder. The above "oxygen in the reaction system" is generally in the form of silicon oxide, active metal powder can reduce the oxygen atom in silicon oxide to generate metal oxides, so as to achieve the purpose of eliminating the oxygen in the system.
2. The lattice oxygen in the silicon nitride powder obtained using the described method is significantly lower than that in silicon nitride powders prepared by other methods because the oxygen is partially reduced before the generation of silicon nitride. Since the lattice oxygen in the powder cannot be removed once the silicon nitride is generated, the powder made using the described method is well suited for use in ceramic sintering where high oxygen content is required (i.e., very low oxygen content is required).
3. The silicon nitride powder obtained using the method described is well crystallized and has a homogeneous morphology.
4. Energy saving. Except for a small amount of energy required for the initiation reaction, the whole synthesis process is maintained and realized by the exothermic reaction, and no additional energy is required.
5. High production efficiency and rapid synthesis reaction.

### BRIEF DESCRIPTION OF THE DRAWINGS

In order to illustrate the technical solutions of the embodiments of the present invention more clearly, the following drawings of the embodiments will be briefly described. Obviously, the drawings in the following description relate only to some embodiments of the present invention and are not a limitation of the present invention.
Fig. 1 is an XRD analysis spectrum of the combustion synthesized silicon nitride powder in Example 1.
Fig. 2 is an SEM chart of the combustion synthesized silicon nitride powder in Example 1.
Fig. 3 is an XRD analysis spectrum of the combustion synthesized silicon nitride powder in Example 2.
Fig. 4 is an SEM chart of the combustion synthesized silicon nitride powder in Example 2.
Fig. 5 is an XRD analysis spectrum of the combustion synthesized silicon nitride powder in Example 5.
Fig. 6 is an XRD analysis spectrum of the combustion synthesized silicon nitride powder in Example 8.
Fig. 7 is an XRD analysis spectrum of the combustion synthesized silicon nitride powder in Example 11.
Fig. 8 is an SEM chart of the combustion synthesized silicon nitride powder in Comparative Example 2.
Fig. 9 is an SEM chart of the combustion synthesized silicon nitride powder in Comparative Example 3.

### DETAILED DESCRIPTION

The silicon nitride and silicon nitride ceramic slurry of the present invention will be described further below in connection with specific embodiments. It should be understood that the following embodiments are intended to illustrate and explain the present invention only exemplarily and should not be construed as limiting the scope of protection of the present invention. Any technology implemented based on the above elements of the present invention is covered by the scope of protection of the present invention.

In the present specification, all percentages are by mass unless otherwise stated.

In the present specification, the reducing metal powders refers to active metal powders that are more reducing than silicon powders and silicon nitride.

For ease of understanding, the present invention is further explained and illustrated below in connection with specific examples of combustion synthesis for the preparation of silicon nitride powders.

### Example 1

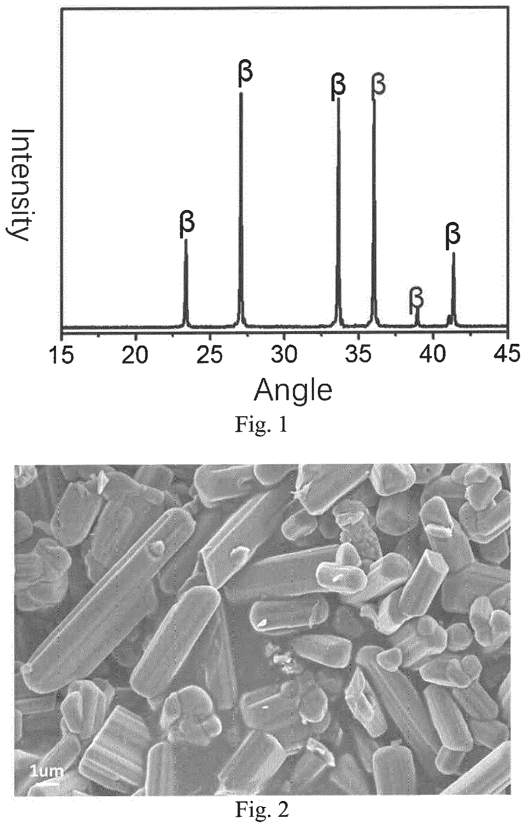

The following components were taken, 200 mesh silicon powder, silicon nitride (average particle size 2 µm), and were mixed with alcohol and then ball milled on a rolling ball mill for 1h with silicon nitride balls as medium, followed by vacuum drying at 80 °C to obtain a mixture. The above mixture after drying was mixed well with magnesium powder in a V-mixer to obtain combustion synthesis raw material (in the combustion synthesis raw material, 200 mesh silicon powder was 70 wt%, silicon nitride (average particle size 2 µm) was 29.99 wt%, ammonium chloride was 0 wt% and magnesium powder was 0.01 wt%). The magnesium powder has particle size of 200 mesh, and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The product was tested by XRD and the results are shown in Fig. 1, where the analysis shows that the β-phase content is 100%, the oxygen content in the silicon nitride is 0.8%, and total impurities are less than 1 wt%. The XRD diagram shown in Fig. 1 shows that the product has good crystalline properties, in contrast to the method of the present specification, for example, the silicon nitride synthesized by the vapor phase method is not crystalline, and there are no characteristic peaks on the XRD spectrum. As seen from the SEM image of the product (Fig. 2), the silicon nitride powder of the present embodiment is well crystallized and homogeneous in shape, and the silicon nitride powder particles show short rods of varying lengths, with the width and height of a single particle ranging from 1-2 µm, while the length varies from 1 µm to 20 µm, and the length-to-diameter ratio ranges from 1-10.

The above "oxygen content" refers to the oxygen content of all states of the silicon nitride powder, including oxygen in free state or chemical state on the powder surface and in the silicon nitride lattice. The same below.

### Example 2

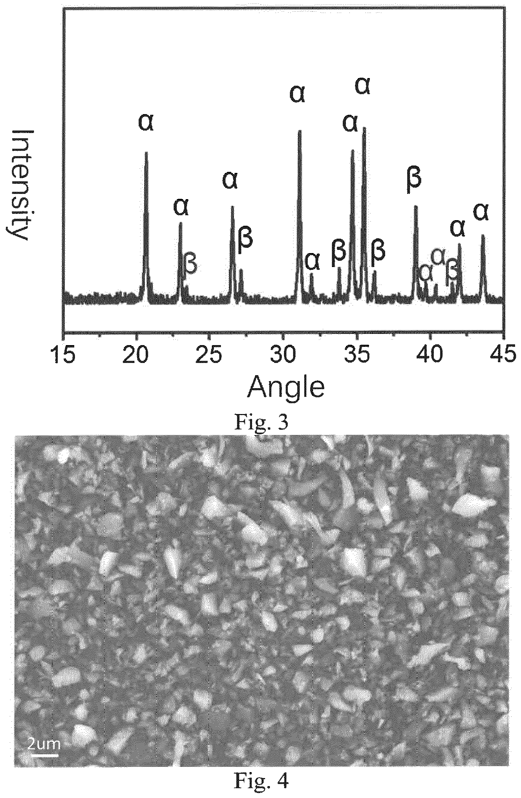

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with magnesium powder in a V-mixer to obtain combustion synthesis raw material (in the combustion synthesis raw material, 200 mesh silicon powder was 70 wt%, silicon nitride (average particle size 2 µm) was 70 wt%, ammonium chloride was 9 wt% and magnesium powder was 1 wt%). The magnesium powder has particle size of 60 mesh, and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The product was tested by XRD and the results are shown in Fig. 3, where the analysis shows that the α-phase content is 95%, the oxygen content in the silicon nitride is 0.5%, and total impurities are less than 1 wt%.

The XRD diagram (Fig. 4) shows that the silicon nitride powder of the present example has good crystalline properties and homogeneous morphology, and the silicon nitride powder particles show irregular polyhedra, with most of the particles between 1-2µm in size, a few larger particles up to 5µm or more, and a few smaller particles less than 1µm in size.

### Example 3

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with magnesium powder in a V-mixer to obtain combustion synthesis raw material (in the combustion synthesis raw material, 200 mesh silicon powder was 20 wt%, silicon nitride (average particle size 2 µm) was 70 wt%, ammonium chloride was 5 wt% and magnesium powder was 5 wt%). The magnesium powder has particle size of 200 mesh, and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The α-phase content is 95%, the oxygen content in the silicon nitride is 0.5%, and total impurities are less than 1 wt%.

### Example 4

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with magnesium powder in a V-mixer to obtain combustion synthesis raw material (in the combustion synthesis raw material, 200 mesh silicon powder was 20 wt%, silicon nitride (average particle size 2 µm) was 70 wt%, ammonium chloride was 2 wt% and magnesium powder was 8 wt%). The magnesium powder has particle size of 200 mesh, and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The α-phase content is 95%, the oxygen content in the silicon nitride is 0.5%, and total impurities are less than 1 wt%.

Comparing the results of Example 3 and Example 4, it can be seen that in the case of a high addition of magnesium powder (e.g., greater than 1 wt%), a further increase in the amount of reducing metal powder has little effect on the performance of the final product. The reason is that, in general, 1 wt% of the reducing metal addition is already enough to react with the oxygen in the raw material, further adding excess metal powder aims to ensure that the vast majority of oxygen reacts with the reducing metal to produce the corresponding oxide; and because the self-propagation reaction temperature can reach 1900 °C, far beyond the corresponding metal powder melting and boiling point, the excess unreacted reducing metal will evaporate away.

### Example 5

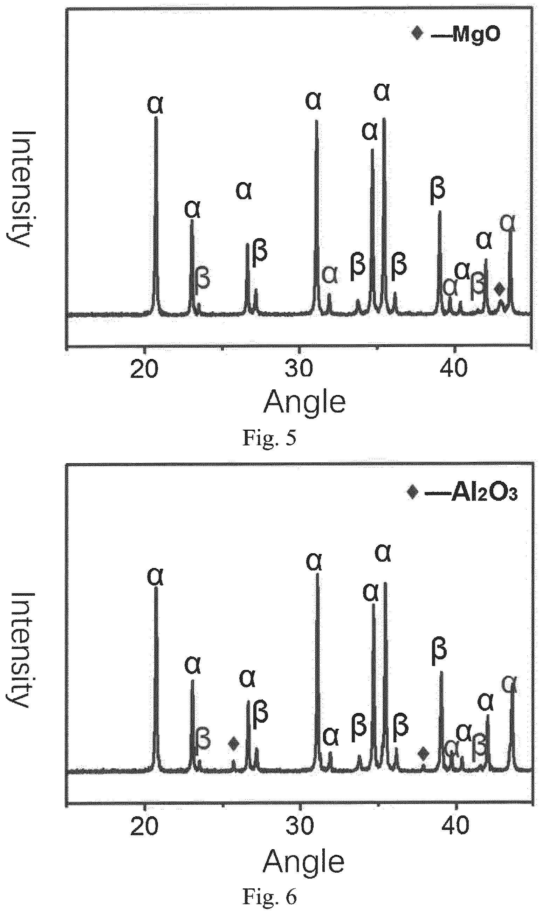

The following components were taken, 100 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with magnesium powder in a V-mixer to obtain combustion synthesis raw material (in the combustion synthesis raw material, 100 mesh silicon powder was 35 wt%, silicon nitride (average particle size 2 µm) was 35 wt%, ammonium chloride was 20 wt% and magnesium powder was 10 wt%). The magnesium powder has particle size of 1000 mesh (crushing process and mixing process of magnesium powder are carried out under the protection of inert gas), and purity > 99 wt%. The mixing process was carried out using inert gas for protection. The combustion synthesis material was then loosely packed in a reaction boat and placed in the combustion synthesis equipment. After evacuation, 5 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results are shown in Fig. 5. The analysis showed that the α-phase content of the product is 95%, the oxygen content in silicon nitride is 0.3%, and the total impurities are less than 1 wt%.

### Comparative Example 1

The following components were taken, 100 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with magnesium powder in a V-mixer to obtain combustion synthesis raw material (in the combustion synthesis raw material, 100 mesh silicon powder was 35 wt%, silicon nitride (average particle size 2 µm) was 35 wt%, ammonium chloride was 20 wt% and magnesium powder was 10 wt%). The magnesium powder has particle size of 1000 mesh, and purity > 99 wt%. The mixing process was carried out in air. The combustion synthesis material was then loosely packed in a reaction boat and placed in the combustion synthesis equipment. After evacuation, 5 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. 1000 mesh magnesium powder is very easy to oxidation in the air, which will bring a lot of oxygen into the reaction raw materials, obtaining a lumpy product, showing overall yellow-white, the surface has a small amount of unreacted residual silicon powder as well as magnesium oxide powder. The product was cleaned, collected, weighed and calculated to show that the product yield was 95%, the oxygen content in silicon nitride is 1%, and the total impurities are 1.5 wt%.

The only difference between Comparative Example 1 and Example 5 is that the crushing and mixing process of magnesium powder in Comparative Example 1 was done in air, while the crushing process and mixing process of magnesium powder in Example 5 were carried out under the protection of inert gas. Other than that, the experimental conditions for both Comparative Example 1 and Example 5 are the same. Comparing the results of Comparative Example 1 and Example 5, it can be seen that the oxygen content and the total amount of impurities in the final product of Comparative Example 1 are somewhat higher compared with Example 5 because the crushing process and the mixing process of magnesium powder are not isolated from oxygen.

### Example 6

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with aluminum powder in a V-mixer to obtain combustion synthesis raw material (in the combustion synthesis raw material, 200 mesh silicon powder was 70 wt%, silicon nitride (average particle size 2 µm) was 20 wt%, ammonium chloride was 9.99 wt% and aluminum powder was 0.01 wt%). The aluminum powder has particle size of 200 mesh and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results showed that the β-phase content of the product is 100%, the oxygen content in silicon nitride is 0.8%, and the total impurities are less than 1 wt%.

### Example 7

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with aluminum powder in a V-mixer to obtain combustion synthesis raw material (in the combustion synthesis raw material, 200 mesh silicon powder was 20 wt%, silicon nitride (average particle size 2 µm) was 70 wt%, ammonium chloride was 9 wt% and aluminum powder was 1 wt%). The aluminum powder has particle size of 200 mesh and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results showed that the α-phase content of the product is 95%, the oxygen content in silicon nitride is 0.5%, and the total impurities are less than 1 wt%.

### Example 8

The following components were taken, 100 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with aluminum powder in a V-mixer to obtain combustion synthesis raw material (in the combustion synthesis raw material, 100 mesh silicon powder was 35 wt%, silicon nitride (average particle size 2 µm) was 35 wt%, ammonium chloride was 20 wt% and aluminum powder was 1 wt%). The aluminum powder has particle size of 200 mesh and purity > 99 wt%. The mixing process was carried out using inert gas for protection. The combustion synthesis material was then loosely packed in a reaction boat and placed in the combustion synthesis equipment. After evacuation, 5 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results are showed in Fig. 6. Analysis showed that the α-phase content of the product is 95%, the oxygen content in silicon nitride is 0.3%, and the total impurities are less than 1 wt%.

### Example 9

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with yttrium powder in a V-mixer to obtain combustion synthesis raw material (in the combustion synthesis raw material, 200 mesh silicon powder was 70 wt%, silicon nitride (average particle size 2 µm) was 20 wt%, ammonium chloride was 9.99 wt% and yttrium powder was 0.01 wt%). The yttrium powder has particle size of 200 mesh and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results showed that the β-phase content of the product is 100%, the oxygen content in silicon nitride is 0.8%, and the total impurities are less than 1 wt%.

### Example 10

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with yttrium powder in a V-mixer to obtain combustion synthesis raw material (in the combustion synthesis raw material, 200 mesh silicon powder was 20 wt%, silicon nitride (average particle size 2 µm) was 70 wt%, ammonium chloride was 9 wt% and yttrium powder was 1 wt%). The yttrium powder has particle size of 200 mesh and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results showed that the α-phase content of the product is 95%, the oxygen content in silicon nitride is 0.5%, and the total impurities are less than 1 wt%.

### Example 11

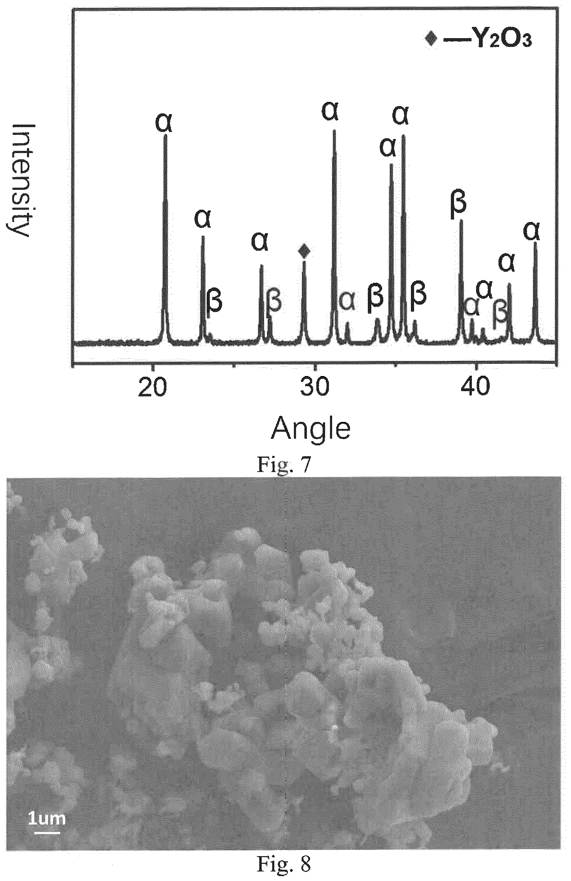

The following components were taken, 100 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with yttrium powder in a V-mixer to obtain combustion synthesis raw material (in the combustion synthesis raw material, 100 mesh silicon powder was 35 wt%, silicon nitride (average particle size 2 µm) was 35 wt%, ammonium chloride was 20 wt% and yttrium powder was 10 wt%). The yttrium powder has particle size of 200 mesh and purity > 99 wt%. The mixing process was carried out using inert gas for protection. The combustion synthesis material was then loosely packed in a reaction boat and placed in the combustion synthesis equipment. After evacuation, 5 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results are showed in Fig. 7. Analysis showed that the α-phase content of the product is 95%, the oxygen content in silicon nitride is 0.3%, and the total impurities are less than 1 wt%.

### Example 12

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with 0.01% iron powder in a V-mixer to obtain combustion synthesis raw material (in the combustion synthesis raw material, 200 mesh silicon powder was 70 wt%, silicon nitride (average particle size 2 µm) was 20 wt%, ammonium chloride was 9.99 wt% and iron powder was 0.01 wt%). The iron powder has particle size of 200 mesh and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results showed that the β-phase content of the product is 100%, the oxygen content in silicon nitride is 0.8%, and the total impurities are less than 1 wt%.

### Example 13

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with ytterbium powder in a V-mixer to obtain combustion synthesis raw material (in the combustion synthesis raw material, 200 mesh silicon powder was 70 wt%, silicon nitride (average particle size 2 µm) was 20 wt%, ammonium chloride was 9.99 wt% and ytterbium powder was 0.01 wt%). The ytterbium powder has particle size of 200 mesh and purity > 99 wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 95%. The products were examined by XRD and the results showed that the β-phase content of the product is 100%, the oxygen content in silicon nitride is 0.8%, and the total impurities are less than 1 wt%.

### Example 14

Weighing 90 wt% of the silicon nitride powder product of Example 2, 5 wt% MgO, and 5 wt% Y₂O₃, respectively, mixing the three raw materials with alcohol, and ball milling them on a planetary mill for 2 h with silicon nitride balls as the medium, followed by vacuum drying at 80°C. The dried powder was sieved through 60 mesh and the sieved powder was dry pressed and molded at a molding pressure of 20 MPa, followed by cold isostatic pressing of the dry pressed prime billet at a pressure of 220 MPa. The formed prime billets were sintered under pneumatic pressure at 1900°C and 1 MPa nitrogen pressure for 8 h. After sintering, the temperature was lowered with the furnace. The sintered samples were tested for thermal conductivity and three-point flexural strength, and the thermal conductivity was 100 W/mK and the flexural strength was 800 MPa.

### Comparative Example 2

The following components were taken according to Example 2, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture (in the mixture, 200 mesh silicon powder weights 20 parts, silicon nitride (average particle size 2 µm) weights 70 parts, ammonium chloride weights 9 parts). The mixture was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction product silicon nitride powder was taken out.

Weighing 90 wt% of the above silicon nitride powder product, 5 wt% MgO, and 5 wt% Y₂O₃, respectively, mixing the three raw materials with alcohol, and ball milling them on a planetary mill for 2 h with silicon nitride balls as the medium, followed by vacuum drying at 80°C. The dried powder was sieved through 60 mesh and the sieved powder was dry pressed and molded at a molding pressure of 20 MPa, followed by cold isostatic pressing of the dry pressed prime billet at a pressure of 220 MPa. The formed prime billets were sintered under pneumatic pressure at 1900°C and 1 MPa nitrogen pressure for 8 h. After sintering, the temperature was lowered with the furnace. The sintered samples were tested for thermal conductivity and three-point flexural strength, and the thermal conductivity was 85 W/mK and the flexural strength was 650 MPa.

The results of Example 14 were compared with those of Comparative Example 2. The test conditions of Example 14 and Comparative Example 2 were the same, the only difference being that 1% magnesium powder was added during the combustion synthesis of silicon nitride powder in Example 14, while no reducing metal powder was added in Comparative Example 2. From the test results, the thermal conductivity of the final sintered product increased from 85 W/mK in Comparative Example 2 to 100 W/mK in Example 14, and the flexural strength increased from 650 MPa in Comparative Example 2 to 800 MPa in Example 14. It can be seen that the addition of reducing metal powder in the process of combustion synthesis for the preparation of silicon nitride powder can substantially improve the sintering performance of silicon nitride powder, and can obtain excellent performance of sintered products based on this silicon nitride powder.

### Example 15

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with magnesium powder in a V-mixer to obtain combustion synthesis raw material (in the combustion synthesis raw material, 200 mesh silicon powder was 20 wt%, silicon nitride (average particle size 2 µm) was 70 wt%, ammonium chloride was 9 wt% and magnesium powder was 1 wt%). The magnesium powder has particle size of 40 mesh, impurity content (Fe, Al, Ca and other metal impurities) >1wt%, O content = 8wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 90%. The α-phase content of the product is 50%, the oxygen content in silicon nitride is 1%, and the total impurities are 1 wt%.

As seen in the SEM image of the product (Fig. 8), the silicon nitride powder produced severe agglomeration, with most of the particles ranging from 1-5 µm in size and agglomerates reaching 10 µm in size.

Weighing 90 wt% of the above silicon nitride powder product, 5 wt% MgO, and 5 wt% Y₂O₃, respectively, mixing the three raw materials with alcohol, and ball milling them on a planetary mill for 2 h with silicon nitride balls as the medium, followed by vacuum drying at 80°C. The dried powder was sieved through 60 mesh and the sieved powder was dry pressed and molded at a molding pressure of 20 MPa, followed by cold isostatic pressing of the dry pressed prime billet at a pressure of 220 MPa. The formed prime billets were sintered under pneumatic pressure at 1900°C and 1 MPa nitrogen pressure for 8 h. After sintering, the temperature was lowered with the furnace. The sintered samples were tested for thermal conductivity and three-point flexural strength, and the thermal conductivity was 50 W/mK and the flexural strength was 500 MPa.

Comparing the results of Examples 2, 14 and 15, it is clear that the performance of the silicon nitride powder and the performance of the sintered products based on this silicon nitride powder are affected to some extent by the use of magnesium powders with larger particle size and lower purity (the effect of purity is more pronounced than particle size).

### Example 16

The following components were taken, 200 mesh silicon powder, silicon nitride (average particle size 2 µm) and ammonium chloride, and were mixed with alcohol and then ball milled on a rolling ball mill for 1h with silicon nitride balls as medium, followed by vacuum drying at 80 °C to obtain a mixture. The above mixture after drying was mixed well with magnesium powder in a V-mixer to obtain combustion synthesis raw material (in the combustion synthesis raw material, 200 mesh silicon powder was 20 wt%, silicon nitride (average particle size 2 µm) was 70 wt%, ammonium chloride was 9 wt% and magnesium powder was 1 wt%). The magnesium powder has particle size of 300 mesh, impurity content (Fe, Al, Ca and other metal impurities) >1wt%, O content = 20wt%. The mixing process was carried out using inert gas for protection. The combustion synthesis material was then loosely packed in a reaction boat and placed in the combustion synthesis equipment. After evacuation, 8 MPa high purity nitrogen gas was charged. The combustion synthesis reaction was induced using titanium powder as the ignition agent. At the end of the combustion reaction, the gas in the device was released, and when it was cooled to below 40 °C by circulating water, the chamber door was opened and the reaction products were taken out. The product was in the form of a relatively loose lump with an overall white color and a small amount of unreacted residual silicon powder on the surface. The product was cleaned, collected, weighed and calculated to show that the product yield was 50%. The α-phase content of the product is 0%, the oxygen content in silicon nitride is 2%, and the total impurities are 2 wt%.

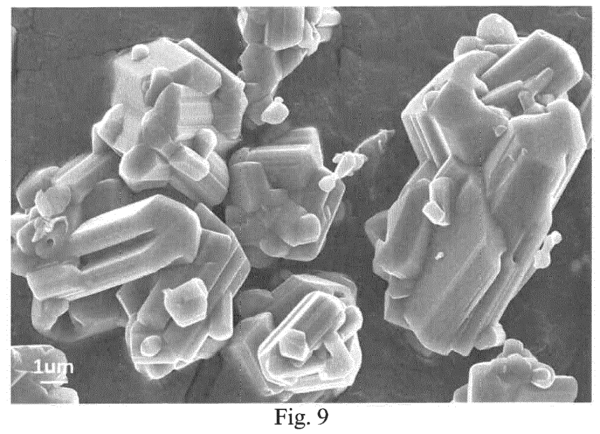

As seen in the SEM image of the product (Fig. 9), the silicon nitride powder produced severe agglomeration, with most of the particles above 5 µm in size and agglomerates reaching 10 µm in size.

Weighing 90 wt% of the above silicon nitride powder product, 5 wt% MgO, and 5 wt% Y₂O₃, respectively, mixing the three raw materials with alcohol, and ball milling them on a planetary mill for 2 h with silicon nitride balls as the medium, followed by vacuum drying at 80°C. The dried powder was sieved through 60 mesh and the sieved powder was dry pressed and molded at a molding pressure of 20 MPa, followed by cold isostatic pressing of the dry pressed prime billet at a pressure of 220 MPa. The formed prime billets were sintered under pneumatic pressure at 1900°C and 1 MPa nitrogen pressure for 8 h. After sintering, the temperature was lowered with the furnace. The sintered samples were tested for thermal conductivity and three-point flexural strength, and the thermal conductivity was 20 W/mK and the flexural strength was 500 MPa.

Comparing the results of Examples 2, 14 and 16, it is clear that the performance of the silicon nitride powder and the performance of the sintered products based on this silicon nitride powder are affected to some extent by the use of magnesium powders with smaller particle size and lower purity (the effect of purity is more pronounced than particle size).

## Claims

1. A method for preparing silicon nitride powder by metal reduction, wherein, the method comprising the steps of:
(1) preparing the following components:
silicon powder;
silicon nitride diluent;
ammonium chloride additive;
(2) mixing the above components well to obtain a mixture;
(3) adding metal powder to the mixture, then mixing the metal powder with the mixture well to obtain a second mixture, and mixing the second mixture well in a V-mixer and/or sieving it to obtain combustion synthesis raw material; in the combustion synthesis raw material, the silicon powder accounts for 20-70wt%, the silicon nitride diluent accounts for 70-20wt% and the ammonium chloride additive accounts for 0- 20wt%;
(4) carrying out combustion synthesis of the combustion synthesis raw material obtained in step (3) to obtain the silicon nitride powder.

2. The method according to claim 1, wherein, purity of the silicon powder raw material in step (1) is > 99wt%;
preferably, a particle size range of the silicon powder in step (1) is 100-200 mesh;
preferably, a weight percentage of the metal powder added in step (3) is 0.01-10% of all components;
preferably, the step (4) comprises: loosely loading the mixture obtained in step (3) in a material boat, then placing the material boat in a combustion synthesis reaction device, evacuating it, filling it with high-purity nitrogen gas, maintaining the pressure in the combustion synthesis reaction device at 1-8 MPa, and igniting the igniter with an energized tungsten coil to induce the combustion synthesis reaction; at the end of the reaction, pressure in the combustion synthesis reaction device begins to fall, at this time releasing the gas in the device, while passing circulating water for cooling; the final product is a loose, easily broken lump, and coarse silicon nitride powder is obtained after grinding; preferably, a purity of the high-purity nitrogen is above 97%, or the purity of the high-purity nitrogen is above 99.9%;
preferably, the method further comprises a step (5) after step (4): washing the silicon nitride powder obtained in step (4) with acid for purification to obtain silicon nitride powder;
preferably, the diluent in step (1) is a high-purity silicon nitride powder with an average particle size in the range of 0.5-10 µm, the high-purity silicon nitride powder having an α phase content of >60 wt%;
preferably, the ammonium chloride additive in step (1) has an average particle size of 0.1-50 µm and a purity of >99 wt %;
preferably, the mixing described in step (2) comprises sand milling, ball milling, stirring milling, V-mixer blending and/or roller milling;
preferably, the sieving in step (3) comprises sieving with a screen having 40-100 mesh holes; further preferably, the sieving in step (3) comprises sieving with a screen having 60 mesh holes.

3. The method according to claim 1, wherein, the metal powder in step (3) comprises at least one of magnesium, calcium, iron, nickel, zinc, aluminum, lithium, sodium, potassium, yttrium, ytterbium.

4. The method according to claim 1, wherein, the metal powder in step (3) has a particle size of 200-1000 mesh, an oxygen content of <5 wt % and a purity of >99 wt %, the oxygen content being not counted as an impurity in the purity.

5. The method according to claim 1, wherein, the mixing in step (3) comprises sand milling, ball milling, stirring milling, V-mixer blending and/or roller milling;
preferably, for metal powder that is prone to oxidation in air, the mixing process should be carried out in an atmosphere of inert gas;
preferably, the metal powder that is prone to oxidation in air comprises calcium, lithium, sodium, potassium, yttrium and ytterbium.

6. The method according to claim 1, wherein, the sieving in step (3) is carried out using a sieve with a mesh size of 20-1000 mesh.

7. The method according to claim 2, wherein, the step (5) comprises: coarsely sieving the silicon nitride powder obtained in step (4) with a sieve of 20-500 mesh and washing with a mixture of nitric acid, hydrochloric acid and sulfuric acid to remove metal oxides from the silicon nitride powder;
preferably, in the mixture of nitric acid, hydrochloric acid and sulfuric acid, a ratio of volume content of nitric acid, hydrochloric acid and sulfuric acid is 10%-20%, 60%-80% and 10%-20%, respectively, and a mass fraction of each acid solution is less than 68%, 20% and 70%, respectively; washing with acid for 1-10 hours, the powder after washing with acid is washed 1-5 times to remove water-soluble substances, and dried by pressure filter drying, spray drying or vacuum drying after filtration.

8. Silicon nitride powder prepared according to the method of any one of claims 1-7, wherein, the silicon nitride powder having an average particle size of 1-50 µm, a metal oxide content of 0-10 wt% and an impurity content of less than 1 wt%;
preferably, the silicon nitride powder contains less than 1 wt % of metal oxides, and the sintered body has a thermal conductivity of 90 W/mK or more and a flexural strength of 700 MPa or more;
preferably, the sintering conditions of the sintered body are: mixing the silicon nitride powder with MgO and Y₂O₃, grinding, and dry pressing to form a prime billet, and sintering the prime billet at 1900°C and 1 MPa nitrogen pressure for 8h.

9. A sintered body, the sintered body is sintered using silicon nitride powder prepared by the method of any one of claims 1-7, wherein, the silicon nitride powder has an average particle size of 1-50 µm, a metal oxide content of 0-10 wt% and an impurity content of less than 1 wt%.

10. A method of manufacturing the sintered body of claim 9, wherein, the method comprising:
(1) preparing raw materials according to following weight percentages:
silicon powder20-70 wt %;
silicon nitride diluent: 70-20 wt %;
ammonium chloride additive: 0-20 wt %;
(2) mixing the above raw materials well to obtain a mixture;
(3) adding metal powder to the mixture, then mixing the metal powder with the mixture well to obtain a second mixture, and sieving the second mixture to obtain a third mixture;
(4) carrying out combustion synthesis of the third mixture obtained in step (3) to obtain silicon nitride powder;
(5) washing the silicon nitride powder obtained from step (4) with acid for purification to obtain purified silicon nitride powder;
(6) mixing, grinding and dry pressing the purified silicon nitride powder with MgO and Y₂O₃ to form a prime billet, and sintering the prime billet at 1900°C and 1 MPa nitrogen pressure for 8h;
preferably, the step (6) comprises: weighing 90 wt% of the silicon nitride powder of Example 2, 5 wt% MgO, and 5 wt% Y₂O₃, respectively, mixing the above three materials with alcohol, and ball milling on a planetary mill for 2 h with silicon nitride balls as medium, followed by vacuum drying at 80 °C; passing dried powder through a 60 mesh sieve, and the sieved powder was dry pressed at a pressure of 20 MPa, followed by cold isostatic pressing of the dry pressed prime billet at 220 MPa; the formed prime billet was sintered under 1 MPa nitrogen pressure at 1900°C for 8 h; the sintered sample was cooled down with the furnace; The sintered sample was tested for thermal conductivity and three-point flexural strength, and the thermal conductivity was 100 W/mK and flexural strength was 800 MPa.
